(19)

Europäisches
Patentamt
European
Patent Office
Office européen
des brevets

(11) **EP 3 026 067 A1**

(12) **EUROPEAN PATENT APPLICATION**
published in accordance with Art. 153(4) EPC

(43) Date of publication:
**01.06.2016  Bulletin 2016/22**

(21) Application number: **14848397.7**

(22) Date of filing: **30.09.2014**

(51) Int Cl.:
*C08F 2/38* (2006.01)        *C08F 2/24* (2006.01)
*C08F 2/40* (2006.01)        *C08F 236/12* (2006.01)
*C08L 9/02* (2006.01)

(86) International application number:
**PCT/JP2014/076019**

(87) International publication number:
**WO 2015/046559 (02.04.2015 Gazette 2015/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **30.09.2013   JP 2013203411**

(71) Applicant: **Zeon Corporation**
**Tokyo 100-8246 (JP)**

(72) Inventor: **YOSHIMURA, Tsutomu**
**Tokyo 100-8246 (JP)**

(74) Representative: **Adam, Holger**
**Kraus & Weisert**
**Patentanwälte PartGmbB**
**Thomas-Wimmer-Ring 15**
**80539 München (DE)**

(54) **NITRILE COPOLYMER RUBBER AND PRODUCTION METHOD FOR SAME**

(57)    A nitrile copolymer rubber obtained by emulsion polymerization using 2,2,4,6, 6-pentarnethylheptane-4-thiol as a chain transfer agent and which has a polymer pH of 8.5 or less is provided. The polymer pH is preferably 8.0 or less. According to the present invention, a nitrile copolymer rubber which is able to give a cross-linked rubber which is excellent in heat resistance and compression set resistance can be provided.

EP 3 026 067 A1

**Description**

TECHNICAL FIELD

The present invention relates to a nitrile copolymer rubber and a method of production of the same, more particularly relates to a nitrile copolymer rubber which is able to give a cross-linked rubber which is excellent in heat resistance and compression set resistance and a method of production of the same.

BACKGROUND ART

In the past, rubber which contains $\alpha,\beta$-ethylenically unsaturated nitrile monomer units and conjugated diene monomer units or olefin monomer units (nitrile copolymer rubber) has been known as rubber which is excellent in oil resistance. Its vulcanized product is mainly being used as materials for fuel hoses, gaskets, packings, oil seals, and other various rubber products which are used around oil in automobile applications.

Such a nitrile copolymer rubber is generally produced by emulsion polymerization using an emulsifying agent. For example, in Patent Document 1, an emulsifying agent constituted by sodium dodecylbenzene sulfonate, a radical initiator constituted by p-menthane hydroperoxide, and a chain transfer agent constituted by t-dodecyl mercaptan are used for emulsion polymerization to thereby obtain a nitrile copolymer rubber. However, in the nitrile copolymer rubber which is obtained by the art of Patent Document 1, when made into cross-linked rubber, the compression set resistance was not necessarily sufficient. For this reason, further improvement of the compression set resistance has been sought.

PRIOR ART DOCUMENTS

PATENT DOCUMENTS

Patent Document 1; Japanese Patent Publication No. 2007-277341A

DISCLOSURE OF THE INVENTION

PROBLEM TO BE SOLVED BY THE INVENTION

The present invention has as its object the provision of a nitrile copolymer rubber which is able to give a cross-linked rubber which is excellent in heat resistance and compression set resistance and a method of production of the same.

MEANS FOR SOLVING THE PROBLEMS

The inventors engaged in in-depth research to solve the above problem and as a result discovered that a nitrile copolymer rubber which is obtained by emulsion polymerization using 2,2,4,6,6-pentamethylheptane-4-thiol as chain transfer agent and which has a polymer pH of 8.5 or less can be used to achieve the above object and thereby completed the present invention.

That is, according to the present invention, there is provided a nitrile copolymer rubber which is obtained by emulsion polymerization using 2,2,4,6, 6-pentamethylheptane-4-thiol as a chain transfer agent and which has a polymer pH of 8.5 or less.

The nitrile copolymer rubber of the present invention preferably has a polymer pH of 8.0 or less.

Further, the nitrile copolymer rubber is preferably obtained by emulsion polymerization of 100 parts by weight of a monomer mixture which contains an $\alpha,\beta$-ethylenically unsaturated nitrile monomer and a conjugated diene monomer using 0.1 to 1 part by weight of 2,2,4,6,6-pentamethylheptane-4-thiol as the chain transfer agent.

In the nitrile copolymer rubber of the present invention, preferably a ratio of content of $\alpha,\beta$-ethylenically unsaturated nitrile monomer units is 10 to 60 wt% and a ratio of content of conjugated diene monomer units is 40 to 90 wt% with respect to 100 wt% of the total monomer units.

Further, according to the present invention, there are provided a cross-linkable nitrile copolymer rubber composition comprising the above nitrile copolymer rubber into which a cross-linking agent is mixed and a cross-linked rubber obtained by cross-linking that cross-linkable nitrile copolymer rubber composition.

Furthermore, according to the present invention, there is provided a method of production of a nitrile copolymer rubber comprising: causing emulsion polymerization of a monomer mixture which contains an $\alpha,\beta$-ethylenically unsaturated nitrile monomer and conjugated diene monomer using 2,2,4,6,6-pentamethylheptane-4- thiol as a chain transfer agent to obtain a latex of a nitrile copolymer rubber; mixing the latex of a nitrile copolymer rubber and a coagulant to obtain a mixture and coagulating the obtained mixture under conditions of a pH of less than 7.0 to obtain coagulated crumb; and drying the coagulated crumb.

EFFECTS OF THE INVENTION

According to the present invention, it is possible to provide a nitrile copolymer rubber which is able to give a cross-linked rubber which is excellent in heat resistance and compression set resistance and a method of production of the same.

DESCRIPTION OF EMBODIMENTS

Nitrile Copolymer Rubber

The nitrile copolymer rubber of the present invention is one obtained by emulsion polymerization using 2,2,4,6,6-pentamethylheptane-4-thiol as a chain transfer agent and has a polymer pH of 8.5 or less.

The nitrile copolymer rubber of the present invention is obtained, for example, by emulsion polymerization of a monomer mixture which contains an $\alpha,\beta$-ethylenically unsaturated nitrile monomer and conj ugated diene monomer using 2,2,4,6,6-pentamethylheptane-4-thiol as a chain transfer agent.

The $\alpha,\beta$-ethylenically unsaturated nitrile monomer is not limited so long as an $\alpha,\beta$-ethylenically unsaturated compound which has nitrile groups. Acrylonitrile; $\alpha$-chloroacrylonitrile, $\alpha$-bromoacrylonitrile, and other $\alpha$-halogenoacrylonitriles; methacrylonitrile and other $\alpha$-alkylacrylonitriles; etc. may be mentioned, while acrylonitrile and methacrylonitrile are preferable. As the $\alpha,\beta$-ethylenically unsaturated nitrile monomer, a plurality of these types may be used combined.

In the nitrile copolymer rubber of the present invention, the ratio of content of the a,$\beta$-ethylenically unsaturated nitrile monomer units is preferably 10 to 60 wt% with respect to 100 wt% of the total monomer units, more preferably 15 to 55 wt%, particularly preferably 20 to 50 wt%. If the content of the $\alpha,\beta$-ethylenically unsaturated nitrile monomer units is too small, the obtained cross-linked rubber is liable to fall in oil resistance while conversely if it is too large, the rubber may fall in cold resistance.

As the conjugated diene monomer, 1,3-butadiene, isoprene, 2,3-dimethyl-1,3-butadiene, 1,3-pentadiene, chloroprene, and other conjugated diene monomers containing 4 to 6 carbon atoms are preferable, 1,3-butadiene and isoprene are more preferable, and 1,3-butadiene is particularly preferable. Among these as well, 1,3-butadiene is preferable.

In the nitrile copolymer rubber of the present invention, the ratio of content of the conjugated diene monomer units is preferably 40 to 90 wt% with respect to 100 wt% of the total monomer units, more preferably 45 to 85 wt%, particularly preferably 50 to 80 wt% in amount. If the content of the conjugated diene monomer units is too small, the obtained cross-linked rubber is liable to fall in elasticity, while if too large, the cross-linked rubber may be impaired in oil resistance, heat aging resistance, chemical resistance stability, etc.

Further, the nitrile copolymer rubber of the present invention may be a copolymer of an $\alpha,\beta$-ethylenically unsaturated nitrile monomer and conjugated diene monomer with another monomer which can copolymerize with these. As such other monomer, ethylene, an a-olefin monomer, an a,$\beta$-ethylenically unsaturated carboxylic acid ester monomer, an $\alpha,\beta$-ethylenically unsaturated carboxylic acid monomer, an $\alpha,\beta$-ethylenically unsaturated polyvalent carboxylic acid anhydride monomer, an aromatic vinyl monomer, a fluorine-containing vinyl monomer, a copolymerizable antiaging agent, etc. may be illustrated.

As the a-olefin monomer, one containing 3 to 12 carbon atoms is preferable. For example, propylene, 1-butene, 4-methyl-1-pentene, 1-hexene, 1-octane, etc. may be mentioned.

As the $\alpha,\beta$-ethylenically unsaturated carboxylic acid ester monomer, for example, methyl acrylate, ethyl acrylate, propyl acrylate, butyl acrylate, n-dodecyl acrylate, methyl methacrylate, ethyl methacrylate, and other acrylic acid alkyl esters and methacrylic acid alkyl esters which have alkyl groups with 1 to 18 carbon atoms; methoxymethyl acrylate, methoxyethyl methacrylate, and other acrylic acid alkoxyalkyl esters and methacrylic acid alkoxyalkyl esters which have alkoxyalkyl groups with 2 to 12 carbon atoms; a-cyanoetliyl acrylate, $\beta$-cyanoethyl acrylate, cyanobutyl methacrylate, and other acrylic acid cyanoalkyl esters and methacrylic acid cyanoalkyl esters which have cyanoalkyl groups with 2 to 12 carbon atoms; 2-hydroxyethyl acrylate, 2-hydroxyethyl methacrylate, 3-hydroxypropyl acrylate, and other acrylic acid hydroxyalkyl esters and methacrylic acid hydroxyalkyl esters which have hydroxyalkyl groups with 1 to 12 carbon atoms; fluorobenzyl acrylate, fluorobenzyl methacrylate, and other fluorine-substituted benzyl group-containing acrylic acid esters and fluorine-substituted benzyl group-containing methacrylic acid esters; trifluoroethyl acrylate, tetrafluoropropyl methacrylate, and other fluoroalkyl group-containing acrylic acid esters and fluoroalkyl group-containing methacrylic acid esters; dimethyl maleate, dimethyl fumarate, dimethyl itaconate, diethyl itaconate, and other unsaturated polyvalent carboxylic acid polyalkyl esters; dimethylaminomethyl acrylate, diethylaminoethyl acrylate, and other amino group-containing $\alpha,\beta$-ethylenically unsaturated carboxylic acid esters; etc. may be mentioned.

As the $\alpha,\beta$-ethylenically unsaturated carboxylic acid monomer, for example, acrylic acid, methacrylic acid, and other α,β-ethylenically unsaturated monocarboxylic acids; maleic acid, fumaric acid, itaconic acid, and other α,β-ethylenically unsaturated polyvalent carboxylic acids; monomethyl maleate, monoethyl maleate, monopropyl maleate, mono-n-butyl maleate, and other maleic acid monoalkyl esters, monocyclopentyl maleate, monocyclohexyl maleate, monocycloheptyl maleate, and other maleic acid monocycloalkyl esters, monomethylcyclopentyl maleate, monoethylcyclohexyl maleate, and other maleic acid monoalkylcycloalkyl esters, monomethyl fumarate, monoethyl fumarate, monopropyl fumarate, mono-n-butyl fumarate, and other fumaric acid monoalkyl esters, monocyclopentyl fumarate, monocyclohexyl fumarate, monocycloheptyl fumarate, and other fumaric acid monocycloalkyl esters, monomethylcyclopentyl fumarate, monoethylcyclohexyl fumarate, and other fumaric acid monoalkylcycloalkyl esters, monomethyl citraconate, monoethyl citraconate, monopropyl citraconate, mono-n-butyl citraconate, and other citraconic acid monoalkyl esters, monocyclopentyl citraconate, monocyclohexyl citraconate, monocycloheptyl citraconate, and other citraconic acid monocycloalkyl esters, monomethylcyclopentyl citraconate, monoethylcyclohexyl citraconate, and other citraconic acid monoalkylcycloalkyl esters, monomethyl itaconate, monoethyl itaconate, monopropyl itaconate, mono-n-butyl itaconate, and other itaconic acid monoalkyl esters, monocyclopentyl itaconate, monocyclohexyl itaconate, monocycloheptyl itaconate, and other itaconic acid monocycloalkyl esters, monomethylcyclopentyl itaconate, monoethylcyclohexyl itaconate, and other itaconic acid monoalkylcycloalkyl esters, and other partial esters of α,β-ethylenically unsaturated polyvalent carboxylic acids; etc. may be mentioned.

As the a,β-ethylenically unsaturated polyvalent carboxylate anhydride monomer, for example, maleate anhydride etc. may be mentioned.

As the aromatic vinyl monomer, styrene, a-methylstyrene, vinylpyridine, etc. may be mentioned.

As the fluorine-containing vinyl monomer, fluoroethylvinyl ether, fluoropropylvinyl ether, o-trifluoromethylstyrene, vinyl pentafluoro benzoate, difluoroethylene, tetrafluoroethylene, etc. may be mentioned.

As the copolymerizable antiaging agent, N-(4-anilinophenyl) acrylamide, N-(4-anilinophenyl)methacrylamide, N-(4-anilinophenyl) cinnamide, N-(4-anilinophenyl)crotonamide, N-phenyl-4-(3-vinylbenzyloxy) aniline,N-phenyl-4-(4-vinylbenzyloxy)aniline, etc. may be mentioned.

As the other monomer which can copolymerize with these, a plurality of types can be used together. In the nitrile copolymer rubber of the present invention, the content of these other monomer units is preferably 30 wt% or less with respect to 100 wt% of the total monomer units, more preferably 15 wt% or less, particularly preferably 5 wt% or less in amount.

The nitrile copolymer rubber of the present invention has a polymer pH of 8.5 or less, preferably 8. 0 or less. Further, the polymer pH is preferably 1 or more, more preferably 2 or more, furthermore preferably 5 or more.

In the present invention, the "polymer pH" is the pH of the ingredients which are contained in the dried rubber and, for example, can be found by the following method. That is, it can be found by dissolving 6 g of dried in 100 g of a solvent which can dissolve it (for example, tetrahydrofuran) to obtain a rubber solution, adding 2.0 ml distilled water to the obtained rubber solution, mixing and stirring the mixture, then measuring the pH of the obtained solution.

In the present invention, by using a nitrile copolymer rubber which is obtained by emulsion polymerization using 2,2,4,6,6-pentamethylheptane-4-thiol as a chain transfer agent and which has a polymer pH of 8.5 or less, it is possible to improve the heat resistance and compression set resistance when made into cross-linked rubber. Note that, if the polymer pH of the nitrile copolymer rubber exceeds 8.5, the obtained cross-linked rubber ends up deteriorating in compression set resistance. Further, in the present invention, the method of controlling the polymer pH of the nitrile copolymer rubber to 8.5 or less is not particularly limited, but, for example, when producing the nitrile copolymer rubber of the present invention by emulsion polymerization, it can be controlled by adjusting the pH at the time of coagulation when coagulating the obtained rubber latex obtained by emulsion polymerization.

Further, the nitrile copolymer rubber of the present invention is one obtained by emulsion polymerization using 2,2,4,6, 6-pentamethylheptane-4-thiol as a chain transfer agent.

The amount of use of 2,2,4,6,6- pentamethylheptane-4-thiol in the emulsion polymerization is not particularly limited, but since the effect of the present invention becomes much more remarkable, one which is obtained by emulsion polymerization of 100 parts by weight of a monomer mixture which contains an a,β-ethylenically unsaturated nitrile monomer and conjugated diene monomer using 0.1 to 1 part by weight of 2,2,4,6,6-pentamethylheptane-4-thiol as a chain transfer agent is preferable, while one which is obtained by emulsion polymerization using 0.2 to 0.6 part by weight 2,2,4,6,6- pentamethylheptane-4-thiol as the chain transfer agent is more preferable.

Note that, when using 2,2,4,6,6-pentamethylheptane-4-thiol as a chain transfer agent, the 2,2,4,6,6-pentamethylheptane-4-thiol may partially be in a state bonded to the polymer chain of the nitrile copolymer rubber of the present invention.

The nitrile copolymer rubber of the present invention has a Mooney viscosity [$ML_{1+4}$ (100°C)] of preferably 10 to 200, more preferably 20 to 150, particularly preferably 20 to 100. The Mooney viscosity of the nitrile copolymer rubber can be adjusted by suitably selecting the amount of chain transfer agent, polymerization reaction temperature, polymerization initiator concentration, and other conditions.

Method of Production of Nitrile Copolymer Rubber

The method of production of the nitrile copolymer rubber of the present invention has a step of causing emulsion polymerization of a monomer mixture which contains an α,β-ethylenically unsaturated nitrile monomer and conjugated diene monomer using 2,2,4,6,6- pentamethylheptane-4-thiol as a chain transfer agent to obtain a latex of a nitrile copolymer rubber, a step of mixing the latex of a nitrile copolymer rubber and a coagulant to obtain a mixture and coagulating the obtained mixture under conditions of a pH of less than 7.0 to obtain coagulated crumb, and a step of drying the coagulated crumb.

At the time of emulsion polymerization, 2,2,4,6,6-pentamethylheptane-4-thiol is used as a chain transfer agent, and an emulsifying agent, polymerization initiator, and other normally used polymerization auxiliary materials can be used.

Note that, the monomer mixture which contains an α,β-ethylenically unsaturated nitrile monomer and conjugated diene monomer is similar to the one explained above.

As the α,β-ethylenically unsaturated nitrile monomer, acrylonitrile and methacrylonitrile are preferable.

Further, as the conjugated diene monomer, 1,3-butadiene and isoprene are preferable, while 1,3-butadiene is more preferable.

Further, as the other monomer which can be copolymerized with, an ethylene, a-olefin monomer, α,β-ethylenically unsaturated carboxylic acid ester monomer, α,β-ethylenically unsaturated carboxylic acid monomer, α,β-ethylenically unsaturated polyvalent carboxylic acid anhydride monomer, aromatic vinyl monomer, fluorine-containing vinyl monomer, copolymerizable antiaging agent, etc. may be illustrated. The specific examples are also similar to those explained above.

In the monomer mixture which contains an α,β-ethylenically unsaturated nitrile monomer and conjugated diene monomer, the ratio of content of the α,β-ethylenically unsaturated nitrile monomer is preferably 10 to 60 parts by weight with respect to 100 parts by weight of the total monomer mixture, more preferably 15 to 55 parts by weight, particularly preferably 20 to 50 parts by weight.

Further, the ratio of content of the conjugated diene monomer is preferably 40 to 90 parts by weight with respect to 100 parts by weight of the total monomer mixture, more preferably 45 to 85 parts by weight, particularly preferably 50 to 80 parts by weight.

Note that, the ratio of content of the other monomers which can be copolymerized is preferably 30 parts by weight or less with respect to 100 parts by weight of the total monomer mixture, more preferably 15 parts by weight or less, particularly preferably 5 parts by weight or less.

The emulsifying agent is not particularly limited, but, for example, polyoxyethylenealkyl ether, polyoxyethylenealkylphenol ether, polyoxyethylenealkyl ester, polyoxyethylenesorbitanalkyl ester, and other nonionic emulsifying agent; a salt of myristic acid, palmitic acid, oleic acid, linoleic acid, and other fatty acid, sodium dodecylbenzene sulfonate and other alkylbenzene sulfonate, higher alcohol sulfuric ester salt, alkyl sulfosuccinic acid salt, and other anionic emulsifying agent; sulfoester of α,β-unsaturated carboxylic acid, sulfate ester of α,β-unsaturated carboxylic acid, sulfoalkyl arylether, and other copolymerizable emulsifying agent; etc. may be mentioned. The amount of use of the emulsifying agent is preferably 0.1 to 10 parts by weight with respect to 100 parts by weight of the total monomers used for polymerization.

The polymerization initiator is not particularly limited if a radical initiator, but potassium persulfate, sodium persulfate, ammonium persulfate, potassium perphosphate, hydrogen peroxide, and other inorganic peroxides; t-butyl peroxide, cumen hydroperoxide, p-mentane hydroperoxide, di-t-butyl peroxide, t-butylcumyl peroxide, acetyl peroxide, isobutyryl peroxide, octanoyl peroxide, dibenzoyl peroxide, 3,5,5-trimethylhexanoyl peroxide, t-butyl peroxyisobutyrate, and other organic peroxides; azobisisobutyronitrile, azobis-2,4-dimethyl valeronitrile, azobiscyclohexane carbonitrile, methyl azobisisobutyrate, and other azo compounds; etc. may be mentioned. The polymerization initiator may be used alone or as two types or more combined. As the polymerization initiator, an inorganic or organic peroxide is preferable. When using the peroxide as the polymerization initiator, it may be combined with sodium hydrogen sulfite, ferrous sulfate, and other reducing agents for use as a redox-based polymerization initiator. The amount of use of the polymerization initiator is preferably 0.01 to 2 parts by weight with respect to 100 parts by weight of the total monomers used for polymerization.

Further, in the present invention, as a chain transfer agent, 2,2,4,6,6-pentamethylheptane-4-thiol is used. By using this, it becomes possible to raise the effect of improvement of the heat resistance and compression set resistance.

Note that, as the chain transfer agent, 2,2,4,6, 6-pentamethylheptane-4-thiol and other chain transfer agents may be used together. The ratio of content of the 2,2,4,6,6-pentamethylheptane-4-thiol in the total chain transfer agent is 50 wt% or more, preferably 70 wt% or more, particularly preferably 90 wt% or more.

Further, the amount of use of the 2,2,4,6, 6-pentamethylheptane-4-thiol in the emulsion polymerization is not particularly limited, but since the effect of the present invention becomes much more remarkable, use of 0.1 to 1 part by weight with respect to 100 parts by weight of a monomer mixture which contains an α,β-ethylenically unsaturated nitrile monomer and conjugated diene monomer is preferable, while use of 0.2 to 0. 6 part by weight is more preferable.

For the medium of the emulsion polymerization, usually water is used. The amount of use of the water is preferably 80 to 500 parts by weight with respect to 100 parts by weight of the total monomer.

Further, at the time of emulsion polymerization, further, in accordance with need, a stabilizer, dispersant, pH adjuster, deoxidant, particle size adjuster, and other secondary polymerization material may be used. In the case of using these, the types and amounts of use are also not particularly limited.

The temperature of the emulsion polymerization is preferably 0 to 80°C, more preferably 0 to 50°C, particularly preferably 0 to 30°C.

The polymerization conversion rate of the emulsion polymerization is preferably 50 to 95%, more preferably 70 to 90%.

Note that, in the present invention, if needed, the carbon-carbon unsaturated bonds of the obtained nitrile copolymer rubber may be hydrogenated by a hydrogenation reaction of the latex of the nitrile copolymer rubber which is obtained by emulsion polymerization. The type and amount of the hydrogenation catalyst which is used for the hydrogenation reaction, the hydrogenation temperature, etc. may be determined based on known methods.

Next, the latex of the nitrile copolymer rubber obtained by emulsion polymerization and the coagulant are mixed to obtain coagulated crumb. The method of mixing the latex of the nitrile copolymer rubber and the coagulant is not particularly limited, but (i) the method of adding the latex of the nitrile copolymer rubber to the aqueous solution which contains the coagulant, (ii) the method of adding the coagulant (aqueous solution is preferable) to the latex of the nitrile copolymer rubber, etc. may be mentioned, but the method of the above (i) is preferable.

Note that, in the present invention, to control the polymer pH of the obtained nitrile copolymer rubber (nitrile copolymer rubber after coagulation and drying) to 8.5 or less, the pH at the time of coagulation, that is, the pH of the mixture which is obtained by mixing the latex of the nitrile copolymer rubber and the coagulant, is adjusted to less than 7.0, preferably to 6.0 or less. Note that, the lower limit of the pH at the time of coagulation is preferably 1.0 or more, more preferably 2.0 or more, furthermore preferably 5.0 or more.

By controlling the pH at the time of coagulation in the above way, it is possible to suitably control the polymer pH of the obtained nitrile copolymer rubber. Note that, as the method of adjusting the pH at the time of coagulation, for example, when using the method of adding the latex of the nitrile copolymer rubber to the aqueous solution which includes the coagulant to cause salting out, the method of adjusting the pH of the aqueous solution which includes the coagulant to the above range by adding sulfuric acid and other inorganic acid etc. may be mentioned.

Further, the coagulant which is used for coagulation is not particularly limited, but calcium chloride, sodium chloride, calcium hydroxide, aluminum sulfate, aluminum hydroxide, etc. may be mentioned. The amount of use of the coagulant is preferably 0.5 to 150 parts by weight with respect to the 100 parts by weight of the solid content in the latex of the nitrile copolymer rubber, more preferably 0.5 to 20 parts by weight.

Further, the thus obtained coagulated crumb can, if necessary, be rinsed and dried to obtain the nitrile copolymer rubber of the present invention. The rinsing and drying can be performed by know methods.

Cross-Linkable Nitrile Copolymer Rubber Composition

The cross-linkable nitrile copolymer rubber composition of the present invention comprises the above-mentioned nitrile copolymer rubber composition of the present invention into which a cross-linking agent is mixed.

As the cross-linking agent, a known cross-linking agent for a rubber can be used, but a sulfur-based cross-linking agent, organic peroxide cross-linking agent, etc. may be mentioned.

As the sulfur-based cross-linking agents, powdered sulfur, flower of sulfur, precipitated sulfur, colloidal sulfur, surface-treated sulfur, insoluble sulfur, and other sulfurs; sulfur chloride, sulfur dichloride, morpholine disulfide, alkylphenol disulfide, dibenzothiazyl disulfide, N,N'-dithio-bis(hexahydro-2H-azenopine-2), phosphorus-containing polysulfide, high molecular weight polysulfide, and other sulfur-containing compounds; tetramethyl thiuram disulfide, selenium dimethyl dithiocarbamate, 2-(4'-morpholinodithio)benzothiazole and other sulfur-donor compounds; etc. may be mentioned.

As the organic peroxide cross-linking agent, dicumyl peroxide, cumen hydroperoxide, t-butyl_cumyl peroxide, p-menthane hydroperoxide, di-t-butyl peroxide, 1,3-bis(t-butylperoxyisopropyl)benzene, 1,4-bis(t-butylperoxyisopropyl)benzene, 1,1-di-t-butylperoxy-3,3-trimethylcyclohexane, 4,4-bis-(t-butylperoxy)-n-butyl valerate, 2,5-dimethyl-2,5-di-t-butylperoxyhexane, 2,5-dimethyl-2,5-di-t-butylperoxyhexine-3, 1,1-di-t-butylperoxy-3,5,5-trimethylcyclohexane, p-chlorobenzoyl peroxide, t-butylperoxyisopropyl carbonate, t-butylperoxy benzoate, etc. may be mentioned.

Among these cross-linking agent, sulfur-based cross-linking agents are preferable, while sulfur is more preferable.

In the cross-linkable nitrile copolymer rubber composition of the present invention, the amount of the cross-linking agent is preferably 0.1 to 10 parts by weight with respect to 100 parts by weight of the nitrile copolymer rubber, more preferably 0.2 to 5 parts by weight.

Furthermore, the cross-linkable nitrile copolymer rubber composition of the present invention may have blended into it, in addition to the cross-linking agent, other compounding agents which are usually used in the field of rubber processing, for example, carbon black, zinc acrylate and zinc methacrylate, and other reinforcing fillers; calcium carbonate, clay and other nonreinforcing fillers, antioxidants, photostabilizers, primary amines and other scorch preventers, plasticizers, processing aids, slip agents, tackifiers, lubricants, flame retardants, acid acceptors, antifungal agents, antistatic agents, coloring agents, silane coupling agents, cross-linking accelerators, cross-linking aids, cross-linking retardants, etc. As the amounts of these compounding agents, amounts according to the purposes of inclusion may be suitably employed.

The cross-linkable nitrile copolymer rubber composition of the present invention is prepared by mixing the above ingredients preferably in a nonaqueous system. The method of preparing the cross-linkable nitrile copolymer rubber composition of the present invention is not limited, but normally the ingredients other than the cross-linking agent and cross-linking aid etc. which are unstable against heat are kneaded by a Banbury mixer, internal mixer, kneader, and other mixer by primary kneading, then the mixture is transferred to rolls etc. to add the cross-linking agent, cross-slinking aid etc. which are unstable against heat, and the mixture is kneaded by secondary kneading.

The Mooney viscosity [$ML_{1+4}$(100°C)] (compound Mooney) of the thus obtained cross-linkable nitrile copolymer rubber composition of the present invention is preferably 15 to 150, more preferably 40 to 120.

Cross-Linked Rubber

A cross-linked rubber of the present invention is one obtained by cross-linking the above-mentioned cross-linkable nitrile copolymer rubber composition of the present invention.

The cross-linked rubber of the present invention can be produced by using the cross-linkable nitrile copolymer rubber composition of the present invention, for example, using a molding machine which corresponds to the desired shape, for example, an extruder, injection molding machine, press, rolls, etc. for molding, heating to cause a cross-linking reaction and thereby fixing the shape as a cross-linked product. In this case, it is possible to mold the rubber, then cross-link it and possible to cross-link it simultaneously with molding. The molding temperature is usually 10 to 200°C, preferably 25 to 120°C. The cross-linking temperature is usually 100 to 200°C, preferably 130 to 190°C, while the cross-linking time is usually 1 minute to 24 hours, preferably 2 minutes to 6 hours.

Further, depending on the shape, size, etc. of the cross-linked rubber, sometimes, even if the surface is cross-linked, the inside part is not sufficiently cross-linked, so it is possible to further heat the rubber for secondary cross-linking.

As the heating method, press heating, steam heating, oven heating, hot air heating, or another general method which is used for cross-linking rubber may be suitably selected.

The thus obtained cross-linked rubber of the present invention is one obtained using the above-mentioned nitrile copolymer rubber of the present invention, so the heat resistance and compression set resistance are excellent. For this reason, the cross-linked rubber of the present invention, taking advantage of the above characteristics, can be suitably used for packing, gaskets, O-rings, oil seals, and other seal members; oil hoses, fuel hoses, inlet hoses, gas hoses, brake hoses, refrigerant hoses, and other hoses; diaphragms; accumulator bladder; boots; etc., but is particularly preferably used as seal members.

EXAMPLE

Below, the present invention will be explained based on further detailed examples, but the present invention is not limited to these embodiments. Note that, below, "parts" are based on weight unless otherwise indicated. Further, the tests and evaluation were as follows.

Composition of Nitrile Copolymer Rubber

The ratio of content of acrylonitrile units in the nitrile copolymer rubber was calculated by measuring the nitrogen content in the nitrile copolymer rubber in accordance with JIS K6383 by the Kjeldahl method.

Mooney Viscosity (Polymer Mooney)

The Mooney viscosity (polymer Mooney) of the nitrile copolymer rubber was measured in accordance with JIS K6300 (units: ($ML_{1+4}$, 100°C)).

Polymer pH

The polymer pH of the nitrile copolymer rubber was measured by the following procedure. That is, first, the nitrile copolymer rubber which was formed to a sheet shape by rolls was finely cut by scissors. The cut nitrile copolymer rubber was weighed to 6 g ($\pm$0.05 g). Next, 6 g of the weighed nitrile copolymer rubber was added to an Erlenmeyer flask containing 100 g of tetrahydrofuran and stirred to make it dissolve in the tetrahydrofuran. Next, 2.0 ml ($\pm$0.1 ml) of distilled water was taken in a syringe, then 2.0 ml of the distilled water was added dropwise a little at a time to the Erlenmeyer flask in the state while stirring the solution. Next, after adding the distilled water, the solution continued to be stirred until the coagulate which was produced by the dropping of the distilled water completely dissolved. Further, the complete dissolution of the coagulate was confirmed, the pH electrode was inserted into the Erlenmeyer flask to measure the pH, then the pH value 1 minute after starting measurement was made the "polymer pH".

Cross-Linkability Test

The cross-linkable nitrile copolymer rubber composition was tested using a rubber vulcanization tester (product name "Moving Die Rheometer MDR", made by Alpha Technologies) according to JIS K6300-2 at 160°C as conditions for a cross-linkabllity test. Further, from the obtained results of the cross-linkability test, the lowest value ML of the torque (units: dN·m), the highest value MH of the torque (units: dN·m), t10 (units: min), and t90 (units: min) were measured. Note that, t10 and t90 mean the time required for the torque to rise 10% from the lowest torque ML when the "lowest value ML of the torque - the highest value of the torque ML" is made 100% and the time required for the torque to rise 90%, respectively. The smaller the t10 and t90, the faster the cross-linking speed, while the larger the highest value MH of the torque, the stronger the cross-linking.

Normal Physical properties (Tensile Strength, Elongation, Tensile Stress, and Hardness)

The cross-linkable nitrile copolymer rubber composition was placed in a vertical 15 cm, horizontal 15 cm, depth 0.2 cm mold and press formed while applying a press pressure of 10 MPa at 160°C for 20 minutes to obtain sheet-shaped cross-linked rubber. Next, the obtained sheet-shaped cross-linked product was punched out to a No. 3 dumbbell shape to prepare a test piece. Further, the obtained test piece was used in accordance with JIS K6251 to measure the cross-linked rubber for tensile strength, tensile stress (100% tensile stress, 200% tensile stress), and elongation and further in accordance with JIS K6253 using a Durometer Hardness Tester (Type A) to measure the cross-linked rubber for hardness.

Heat Aging Resistance Test

A sample similar to the sheet-shaped cross-linked article used for evaluation of the normal physical properties was obtained, then punched by a JIS No. 3 dumbbell to prepare a test piece. The obtained test piece was used in accordance with JIS K6257 "Aging Test Method of Vulcanized Rubber", Section 4 "Air Heat Aging Test (Normal Oven Method) " for air heating and aging under conditions of 100°C for 70 hours. The test piece treated by air heating and aging (heat aged test piece) was measured in accordance with JIS K6251 for tensile stress (100% tensile stress, 200% tensile stress) and elongation and further was measured in accordance with JIS K6253 for hardness using a Durometer Hardness Tester (Type A). From the results of measurement, using the following formulas, the rate of change of elongation, the rate of change of the tensile stress (rate of change of 100% tensile stress and rate of change of 200% tensile stress), and amount of change of hardness were found. The smaller the absolute values of the rate of change of tensile stress, rate of change of elongation, and amount of change of hardness, the better the heat aging resistance.

$$\text{Rate of change of tensile stress (\%)} = \{((\text{tensile stress after heat aging}) - (\text{tensile stress in normal state}))/(\text{tensile stress in normal state})\} \times 100$$

$$\text{Rate of change of elongation (\%)} = \{((\text{elongation after heat aging}) - (\text{elongation in normal state}))/(\text{elongation in normal state})\} \times 100$$

$$\text{Amount of change of hardness} = (\text{hardness after heat aging}) - (\text{hardness in normal state})$$

Compression Set Rate

The cross-linkable nitrile copolymer rubber composition was cross-linked by pressing at a temperature of 160°C for 30 minutes to thereby obtain a columnar cross-linked rubber with a diameter of 29 mm and a height of 12.7 mm. Further, using the obtained cross-linked rubber, in accordance with JIS K6262, the cross-linked rubber was compressed by 25% and allowed to stand in that state in an environment of 100°C for 70 hours, then the compression was released and the compression set rate was measured. The smaller the compression set rate in value, the better the compression set resistance.

Synthesis Example 1

An internal volume 10 liter reaction vessel was charged with 2 parts of potassium oleate (emulsifier), 0.1 part of potassium phosphate (stabilizer), and 200 parts of water, then 25 parts of acrylonitrile and 0.40 part of 2,2,4,6,6-pentamethylheptane-4-thiol (PMHT, chain transfer agent) were added to this. Further, the inside gas was substituted with nitrogen three times, then the reaction vessel was held at 10°C, 75 parts of butadiene, 0.015 part of ferrous sulfate (activant), and 0.05 part of p-mentane hydroperoxide (polymerization initiator) were charged to start the polymerization reaction. Further, when the polymerization conversion rate reached 80%, 0.2 part of hydroxylamine sulfate salt (polymerization terminator) was added to stop the polymerization reaction, then the mixture was warmed to 70°C, steam distillation was used to recover the residual monomer under reduced pressure at 70°C, and 2 parts of alkylated phenol (antiaging agent) was added to obtain a latex of a nitrile copolymer rubber.

Next, 100 parts (converted to solid content) of the obtained latex of the nitrile copolymer rubber was added to and mixed with 1500 parts of concentration 0.2 wt% calcium chloride aqueous solution while stirring to thereby obtain coagulated crumbs. Note that, when adding and mixing them while stirring, sulfuric acid was added to the obtained mixture to adjust the mixture to a pH=5.

Further, the obtained coagulated crumbs were taken out, rinsed, then dried at 50 °C for 8 hours under reduced pressure to obtain the nitrile copolymer rubber (A1). The obtained nitrile copolymer rubber (A1 had a polymer composition of 28 wt% of acrylonitrile units and 72 wt% of butadiene units and had a Mooney viscosity (polymer Mooney) of 51 and a polymer pH of 7.9.

Synthesis Example 2

Except for adjusting the mixture to a pH=3 when adding a latex of nitrile copolymer rubber to a concentration 0.2 wt% calcium chloride aqueous solution while stirring and mixing them by adding sulfuric acid, the same procedure was followed as in Synthesis Example 1 to obtain the nitrile copolymer rubber (A2). The obtained nitrile copolymer rubber (A2) had a polymer composition of 28 wt% of acrylonitrile units and 72 wt% of butadiene units and had a Mooney viscosity (polymer Mooney) of 53 and a polymer pH of 7.1.

Synthesis Example 3

Except for making the mixture a pH=9 when adding a latex of nitrile copolymer rubber to a concentration 0.2 wt% calcium chloride aqueous solution while stirring and mixing them by not adding sulfuric acid, the same procedure was followed as in Synthesis Example 1 to obtain the nitrile copolymer rubber (A3). The obtained nitrile copolymer rubber (A3) had a polymer composition of 28 wt% of acrylonitrile units and 72 wt% of butadiene units and had a Mooney viscosity (polymer Mooney) of 52 and a polymer pH of 9.0.

Synthesis Example 4

Except for using, as a chain transfer agent, 0.35 part of t-dodecylmercaptan (TDM) (product name "Sulfole 120", made by Chevron Phillips Chemical, t-dodecylmercaptan purity: 90 to 100 wt%) instead of 0.40 part of 2,2,4,6, 6-pentamethylheptane-4-thiol, the same procedure was followed as in Synthesis Example 1 to obtain the nitrile copolymer rubber (A4) . The obtained nitrile copolymer rubber (A4) had a polymer composition of 28 wt% of acrylonitrile units and 72 wt% of butadiene units and had a Mooney viscosity (polymer Mooney) of 54 and a polymer pH of 7.6.

Synthesis Example 5

Except for adjusting the mixture to a pH=3 when adding a latex of nitrile copolymer rubber to a concentration 0.2 wt% calcium chloride aqueous solution while stirring and mixing them by adding sulfuric acid, the same procedure was followed as in Synthesis Example 4 to obtain the nitrile copolymer rubber (A5). The obtained nitrile copolymer rubber (A5) had a polymer composition of 28 wt% of acrylonitrile units and 72 wt% of butadiene units and had a Mooney viscosity (polymer Mooney) of 51 and a polymer pH of 7.0.

Synthesis Example 6

Except for making the mixture a pH=9 when adding a latex of nitrile copolymer rubber to a concentration 0.2 wt% calcium chloride aqueous solution while stirring and mixing them by not adding sulfuric acid, the same procedure was followed as in Synthesis Example 4 to obtain the nitrile copolymer rubber (A6). The obtained nitrile copolymer rubber (A6) had a polymer composition of 28 wt% of acrylonitrile units and 72 wt% of butadiene units and had a Mooney viscosity (polymer Mooney) of 53 and a polymer pH of 8.8.

Example 1

A Banbury mixer was used to add to and knead with 100 parts of the nitrile copolymer rubber (A1) which is obtained at Synthesis Example 1, 60 parts of SRF carbon black, 1 part of stearic acid, 5 parts of zinc oxide, and 5 parts of dioctyl phthalate, next the mixture was transferred to rolls and 0.5 part of powdered sulfur (325 mesh), 1. 5 parts of tetramethylthiuram disulfide, and 1.5 parts of N-cyclohexyl-2-benzothiazyl phenamide to prepare the cross-linkable nitrile copolymer rubber composition.
Further, the obtained cross-linkable nitrile copolymer rubber composition was used by the above-mentioned method to perform the tests and measurements of the cross-linkability test, normal physical properties, heat aging resistance test, and compression set test. The results are shown in Table 1.

Example 2

Except for using, instead of 100 parts of the nitrile copolymer rubber (A1) which was obtained at Synthesis Example 1, 100 parts of the nitrile copolymer rubber (A2) which was obtained at Synthesis Example 2, the same procedure was followed as in Example 1 to obtain the cross-linkable nitrile copolymer rubber composition and the same procedure was followed to evaluate it. The results are shown in Table 1.

Comparative Example 1

Except for using, instead of 100 parts of the nitrile copolymer rubber (A1) which was obtained at Synthesis Example 1, 100 parts of the nitrile copolymer rubber (A3) which was obtained at Synthesis Example 3, the same procedure was followed as in Example 1 to obtain the cross-linkable nitrile copolymer rubber composition and the same procedure was followed to evaluate it. The results are shown in Table 1.

Comparative Example 2

Except for using, instead of 100 parts of the nitrile copolymer rubber (A1) which was obtained at Synthesis Example 1, 100 parts of the nitrile copolymer rubber (A4) which was obtained at Synthesis Example 4, the same procedure was followed as in Example 1 to obtain the cross-linkable nitrile copolymer rubber composition and the same procedure was followed to evaluate it. The results are shown in Table 1.

Comparative Example 3

Except for using, instead of 100 parts of the nitrile copolymer rubber (a1) which was obtained at Synthesis Example 1, 100 parts of the nitrile copolymer rubber (A5) which was obtained at Synthesis Example 5, the same procedure was followed as in Example 1 to obtain the cross-linkable nitrile copolymer rubber composition and the same procedure was followed to evaluate it. The results are shown in Table 1.

Comparative Example 4

Except for using, instead of 100 parts of the nitrile copolymer rubber (A1) which was obtained at Synthesis Example 1, 100 parts of the nitrile copolymer rubber (A6) which was obtained at Synthesis Example 6, the same procedure was followed as in Example 1 to obtain the cross-linkable nitrile copolymer rubber composition and the same procedure was followed to evaluate it. The results are shown in Table 1.
Table 1

Table 1

| | | | | Example | | Comparative Example | | | |
|---|---|---|---|---|---|---|---|---|---|
| | | | | 1 | 2 | 1 | 2 | 3 | 4 |
| Nitrile copolymer rubber | | | | | | | | | |
| | Composition | Butadiene units | (wt%) | 72 | 72 | 72 | 72 | 72 | 72 |
| | | Acrylonitrile units | (wt%) | 28 | 28 | 28 | 28 | 28 | 28 |
| | Manufacturing conditions | Type of chain transfer agent | | PMHT | PMHT | PMHT | TDM | TDM | TDM |
| | | Coagulation pH | | 5 | 3 | 9 | 5 | 3 | 9 |
| | Rubber physical properties | Mooney viscosity | | 51 | 53 | 52 | 54 | 51 | 53 |
| | | Polymer pH | | 7.9 | 7.1 | 9.0 | 7.6 | 7.0 | 8.8 |
| Evaluation | | | | | | | | | |
| | Cross-linkability test | MH | (dN·m) | 23.7 | 23.7 | 23.8 | 18.2 | 18.1 | 18.3 |
| | | ML | (dN·m) | 3.1 | 3.1 | 3.1 | 2.7 | 2.8 | 2.7 |
| | | t10 | (min) | 1.9 | 2.0 | 1.8 | 2.3 | 2.3 | 2.3 |
| | | t90 | (min) | 3.5 | 3.2 | 3.6 | 3.9 | 4.0 | 4.1 |
| | Normal physical properties | Tensile strength | (MPa) | 15.9 | 16.2 | 16.1 | 18.0 | 16.4 | 17.9 |
| | | Elongation | (%) | 350 | 360 | 360 | 420 | 400 | 420 |
| | | 100% tensile stress | (MPa) | 3.3 | 3.4 | 3.2 | 2.4 | 2.3 | 2.4 |
| | | 200% tensile stress | (MPa) | 8.2 | 7.7 | 7.8 | 6.4 | 6.1 | 6.5 |
| | | Hardness (Duro-A) | | 72 | 71 | 71 | 67 | 67 | 68 |
| | Heat aging resistance test | Rate of change of elongation | (%) | -3 | -8 | -8 | -33 | -25 | -38 |
| | | Rate of change of 100% tensile stress | (%) | +18 | +3 | +16 | +62 | +59 | +67 |
| | | Rate of change of 200% tensile stress | (%) | +18 | +14 | +18 | +71 | +70 | +80 |
| | | Amount of change of hardness | | +2 | +2 | +2 | +5 | +5 | +5 |
| | Compression set test | Compression set rate | (%) | 9 | 6 | 12 | 16 | 15 | 15 |
| * In the table, "PMHT" indicates 2,2,4,6,6-pentamethylheptane-4-thiol, while "TDM" indicates t-dodecylmercaptan. | | | | | | | | | |

As shown in Table 1, a cross-linked rubber which was obtained by using a nitrile copolymer rubber which was obtained by emulsion polymerization using 2,2,4,6, 6-pentamethylheptane-4-thiol as a chain transfer agent and which had a polymer pH of 8.5 or less was excellent in heat resistance. Further, the compression set rate was also kept low and the compression set resistance was also excellent (Examples 1 and 2).

On the other hand, when using a nitrile copolymer rubber which was obtained by emulsion polymerization using 2,2,4,6,6-pentamethylheptane-4-thiol as a chain transfer agent, but had a polymer pH of 9.0, the obtained cross-linked rubber was high in compression set rate and inferior in compression set resistance (Comparative Example 1).

Further, when using a nitrile copolymer rubber which was obtained using a chain transfer agent constituted by t-dodecyl mercaptan at the time of emulsion polymerization, the obtained cross-linked rubber was inferior in heat resistance and further was high in compression set rate and inferior in compression set resistance (Comparative Examples 2 to 4).

**Claims**

1. A nitrile copolymer rubber which is obtained by emulsion polymerization using 2,2,4,6,6-pentamethylheptane-4-thiol as a chain transfer agent and which has a polymer pH of 8.5 or less.

2. The nitrile copolymer rubber according to claim 1 wherein the polymer pH is 8.0 or less.

3. The nitrile copolymer rubber according to claim 1 or 2 wherein the nitrile copolymer rubber is obtained by emulsion polymerization of 100 parts by weight of a monomer mixture which contains an $\alpha,\beta$-ethylenically unsaturated nitrile monomer and a conjugated diene monomer using 0.1 to 1 part by weight of 2, 2, 4, 6, 6-pentamethylheptane-4-thiol as the chain transfer agent.

4. The nitrile copolymer rubber according to claim 3 wherein a ratio of content of $\alpha,\beta$-ethylenically unsaturated nitrile monomer units is 10 to 60 wt% and a ratio of content of conjugated diene monomer units is 40 to 90 wt% with respect to 100 wt% of the total monomer units.

5. A cross-linkable nitrile copolymer rubber composition comprising the nitrile copolymer rubber according to any one of claims 1 to 4 into which a cross-linking agent is mixed.

6. A cross-linked rubber obtained by cross-linking the cross-linkable nitrile copolymer rubber composition according to claim 5.

7. A method of production of a nitrile copolymer rubber comprising:

causing emulsion polymerization of a monomer mixture which contains an $\alpha,\beta$-ethylenically unsaturated nitrile monomer and conjugated diene monomer using 2,2,4,6,6-pentamethylheptane-4-thiol as a chain transfer agent to obtain a latex of a nitrile copolymer rubber;
mixing the latex of a nitrile copolymer rubber and a coagulant to obtain a mixture and coagulating the obtained mixture under conditions of a pH of less than 7.0 to obtain coagulated crumb; and
drying the coagulated crumb.

## INTERNATIONAL SEARCH REPORT

| International application No. |
|---|
| PCT/JP2014/076019 |

A. CLASSIFICATION OF SUBJECT MATTER
*C08F2/38*(2006.01)i, *C08F2/24*(2006.01)i, *C08F2/40*(2006.01)i, *C08F236/12*
(2006.01)i, *C08L9/02*(2006.01)i

According to International Patent Classification (IPC) or to both national classification and IPC

B. FIELDS SEARCHED

Minimum documentation searched (classification system followed by classification symbols)
C08F2/00-2/60, C08F12/00-36/22, C08L1/00-101/14

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 8-100025 A  (Nippon Zeon Co., Ltd.),<br>16 April 1996 (16.04.1996),<br>claims 1 to 3; paragraphs [0080] to [0084]<br>& US 5651995 A        & EP 704459 A1 | 1-7 |
| A | WO 1994/022924 A1  (Nippon Zeon Co., Ltd.),<br>13 October 1994 (13.10.1994),<br>claims 1 to 12; pages 17 to 19<br>& US 5627250 A        & EP 692496 A1 | 1-7 |
| A | JP 8-67706 A  (Nippon Zeon Co., Ltd.),<br>12 March 1996 (12.03.1996),<br>claims 1 to 3; paragraph [0045]<br>& US 5807941 A        & EP 779300 A1<br>& WO 1996/006868 A1 | 1-7 |

| ☒ | Further documents are listed in the continuation of Box C. | ☐ | See patent family annex. |

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 15 December, 2014 (15.12.14) | 22 December, 2014 (22.12.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

13

**INTERNATIONAL SEARCH REPORT**

International application No.

PCT/JP2014/076019

C (Continuation).   DOCUMENTS CONSIDERED TO BE RELEVANT

| Category* | Citation of document, with indication, where appropriate, of the relevant passages | Relevant to claim No. |
|---|---|---|
| A | JP 7-53609 A  (Nippon Zeon Co., Ltd.),<br>28 February 1995 (28.02.1995),<br>claims 1, 2; paragraph [0026]<br>(Family: none) | 1-7 |
| A | JP 2003-535931 A  (Bayer AG.),<br>02 December 2003 (02.12.2003),<br>claims 1 to 5; paragraphs [0035] to [0037]<br>& US 2003/0171518 A1    & WO 2001/094432 A1 | 1-7 |
| A | JP 2004-285263 A  (Nippon Zeon Co., Ltd.),<br>14 October 2004 (14.10.2004),<br>claims 1 to 4; paragraphs [0045] to [0048]<br>(Family: none) | 1-7 |
| A | JP 2010-528139 A  (Lanxess Deutschland GmbH),<br>19 August 2010 (19.08.2010),<br>claims 1 to 24; paragraphs [0028], [0057],<br>[0169] to [0174]<br>& US 2008/0293889 A1    & WO 2008/142035 A1 | 1-7 |
| A | JP 2010-527956 A  (Lanxess Deutschland GmbH),<br>19 August 2010 (19.08.2010),<br>claims 1 to 21; paragraphs [0032], [0095],<br>[0118] to [0121]<br>& US 2008/0293902 A1    & WO 2008/142037 A2 | 1-7 |
| P,A | JP 2014-518300 A  (Versalis S.p.A.),<br>28 July 2014 (28.07.2014),<br>claims 1 to 20; paragraphs [0130] to [0155]<br>& WO 2013/000890 A1 | 1-7 |

Form PCT/ISA/210 (continuation of second sheet) (July 2009)

**EP 3 026 067 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007277341 A